# EUROPEAN PATENT SPECIFICATION

(11) **EP 3 454 421 B1**
(45) Date of publication and mention of the grant of the patent: **23.08.2023**
(21) Application number: 18191682.6
(22) Date of filing: 30.08.2018
(51) Int. Cl.: H01R 4/36, H01R 4/30, F16B 31/02

(54) **SHEARING SCREW AND USE THEREOF**
SCHERSCHRAUBE UND ANWENDUNG DAVON
VIS DE CISAILLEMENT ET SON UTILISATION

(30) Priority: 08.09.2017 FI 20175798
(43) Date of publication of application: 13.03.2019
(73) Proprietor: Ensto Oy, 06101 Porvoo (FI)
(72) Inventor: Jalo, Jukka, 11130 Riihimäki (FI); Kenkkilä, Hannele, 04200 Kerava (FI); Lindberg, Stefan, 06100 Porvoo (FI); Martikainen, Petri, 06100 Porvoo (FI); Toivanen, Antti, 06400 Porvoo (FI)
(74) Representative: Papula Oy

(56) References cited:
- EP-A1- 2 846 052
- WO-A1-2015/033065
- CN-Y- 2 926 633
- US-A- 3 789 644
- US-A1- 2012 202 393

## Description

### FIELD

The present disclosure relates to a shearing screw for clamping an electrical conductor within a cable connector and a method for clamping an electrical conductor to a cable connector using said shearing screw.

### BACKGROUND

Cable connectors are used to join cables to other cables, for example by cable splicing, or to terminal bodies. By securing the cables within the connector by fasteners such as screws or bolts, the requirement for additional fastening devices in assembling the connection may be disposed of.

A particular type of cable connectors is one that is adapted for low and medium voltage power lines, such as in electrical grids. These cable connectors can be adapted for fasteners such as shearing screws which clamp the cable to the cable connector so that an electric connection is formed within the cable connector. For this purpose, the cable connector itself can be conductive to so that the electric current from the cable can be conducted through the connector. Shearing screws are particularly useful for certain types of installations including, for example, underground cables and installations where long-term durability is important and there is no need to repeatedly screw and unscrew the connectors.

For many of the existing shearing screws, a common problem is how to ensure that the screw is sheared at the correct point. For example, leaving the screw too long may result in damage to covering material placed on the cable connector whereas leaving the screw too short risks detaching the screw held in position by the portion of its length in contact with threads in the connector body. Another problem is how to ensure that the clamping force exerted by the screw on the cable is not too strong so as to damage the cable but also not too weak so as to let the cable escape clamping.

For example, EP 2846052 A1 discloses a torque controlling break screw for securing a wire or cable within a connector.

### SUMMARY

An objective is to eliminate at least some of the drawbacks referred to above. In particular, an objective is to disclose a shearing screw which may be installed in separate tightening and shearing steps effected by modified threads in the shearing screw. This objective is achieved by a shearing screw according to independent claim 1 and a method using said shearing screw according to independent claim 8.

By cable, it is meant here an elongated electrical conductor, which may be a transmission line in an electric power network. The cable connector is a device suitable for connecting one or more cables to each other or to an external body. For example, the cable connector may be a connector comprising two or more inlets for connecting cables to each other, for example spliced cables. The cables may be uncovered at the end entering the cable connector, so that they are exposed for direct galvanic contact. Word "inlet" has been used here as the inlets provide access in to the connector body, but it is acknowledged that, for example, the word "outlet" may be used interchangeably as the inlets also provide an exit point for the cables. The cable connector may also be a cable lug or a cable shoe (hereinafter "cable lug") for acting as a terminal connection for at least one cable, the cable lug having one or more inlets for cables. As the cable lug functions as a terminal connection for a cable, the cable connector may only connect the cable to external bodies and the cable remains electrically disconnected from any other cables within the cable connector.

By shearing screw (below also "screw"), it is meant here a screw element adapted for a portion to be sheared off upon installation. The shearing typically takes place in a cross-sectional plane of the screw where the plane is perpendicular or substantially perpendicular to the longitudinal direction of the screw. The screw is suitable for fastening the cable to the connector, for example by clamping the cable to the connector. The screws are threaded. The connector comprises at least one hole or bore for a screw, which may also be threaded and which are hereinafter referred to as "screw holes". It is noted that other expression such as a "shearing bolt" may also be used to describe the shearing screw.

The shearing screw as disclosed may be used for cable connectors in electrical grids, e.g. low-voltage and/or middle voltage transmission lines. This may involve, for example, voltages of 1-36 kV. The screws required for this purpose are typically very strong, metallic screws having diameters of one or more centimeters, for example around two centimeters. Consequently, the force required to install them is also notable. The shearing screw may be installed under a sleeve such as a cold-shrink sleeve or a heat-shrink sleeve.

In a first aspect, a shearing screw for clamping an electrical conductor within a cable connector comprises a first body having an outer thread for engaging the cable connector, a clamping surface for clamping the electrical conductor within the cable connector and a tightener for fastening the shearing screw to the cable connector and for shearing the shearing screw. The tightener further comprises a second body having an inner thread for engaging the outer thread of the first body and a bearing surface for engaging the cable connector so that a tensile force is introduced in the shearing screw for shearing the shearing screw. In particular, the tensile force may be introduced through the bearing surface to the second body and, through the threads, into the first body. A region of the inner thread or a region of the outer thread is adapted to form an impediment for preventing or hindering relative movement, such as rotation, between the first body and the tightener. The impediment allows increasing the coupling, including the friction, of the inner thread and the outer thread in the region. The impediment may be adapted to increase the static friction between the tightener and the shearing screw so that their relative movement is prevented or hindered throughout the tightening of the shearing screw. The construction of the shearing screw allows the fastening of the screw to take place in separate tightening and shearing steps with the shearing screw adapted to effect a controlled clamping force, which may be predetermined. Furthermore, the construction allows the obsolete portion of the shearing screw to be removed in one shearing step. The tightener may stay in one piece throughout the installation. It may be torn off together with sheared off portion of the first body.

The impediment is adapted to yield when a clamping force transmitted into the shearing screw exceeds a threshold. This allows the shearing screw to be adapted to a well-defined tightening step after which the tightener no longer tightens the screw body.

The impediment is formed by a mismatched or punched thread. This allows the inner thread, the outer thread or both to act themselves as an impediment so that no additional impeding elements are required in the screw construction. The mismatched-thread impediment can be manufactured resource efficiently simultaneously when the threads are machined into the shearing screw. By punching out one or more regions of the inner thread or the outer thread or both, the friction between the threads may be increased in another manner which is simple to control and accommodate in the manufacturing process.

In an embodiment, the first body has a first end for engaging the tightener and a second end for engaging the cable connector. The impediment is situated at the first end.

In an embodiment, the impediment is adapted to prevent or hinder rotation of the first body with respect to the second body while the shearing screw is being screwed into the cable connector.

In an embodiment, the first body has a continuous shearing surface along the length of the body for facilitating shearing of the shearing screw at any length within the continuous shearing surface.

In an embodiment, the first body is hollow. This allows the force or torque required to shear off the shearing screw to be reduced and controlled. While not necessary for functioning of the screw, it also allows an additional pressure element to be inserted into the shearing screw.

In an embodiment, the second body has a surface adapted for a tool for rotating the second body. In a further embodiment, the surface is polygonal.

In a second aspect, a method for clamping an electrical conductor to a cable connector using a shearing screw according to the first aspect or any its embodiments comprises rotating the tightener to effect rotation of the first body, thereby screwing the first body into the cable connector. The method further comprises rotating the tightener to effect yielding of the impediment, thereby causing the second body to rotate with respect to the first body until the bearing surface engages the cable connector and rotating the tightener to effect a tensile force to be transmitted through the bearing surface to the shearing screw, thereby causing a portion of the shearing screw to tear off. In particular, the tensile force may be transmitted to the first body 140 causing a portion of the first body to tear off.

It is to be understood that the aspects and embodiments of the invention described above may be used in any combination with each other. Several of the aspects and embodiments may be combined together to form a further embodiment of the invention.

### LIST OF FIGURES

The accompanying drawings, which are included to provide a further understanding of the invention and constitute a part of this specification, illustrate embodiments of the invention and together with the description help to explain the principles of the invention. In the drawings:
Fig. 1a illustrates a cable connector including a shearing screw according to the present invention.
Fig. 1b illustrates a shearing screw according to the present invention.
Fig. 2 illustrates a cable connector with a shearing screw according to the present invention inserted therein in a cross-sectional view.
Fig. 3 illustrates the process of fastening and shearing a shearing screw according to the present invention in a cross-sectional view.

Like references are used to designate equivalent or at least functionally equivalent parts in the accompanying drawings.

### DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

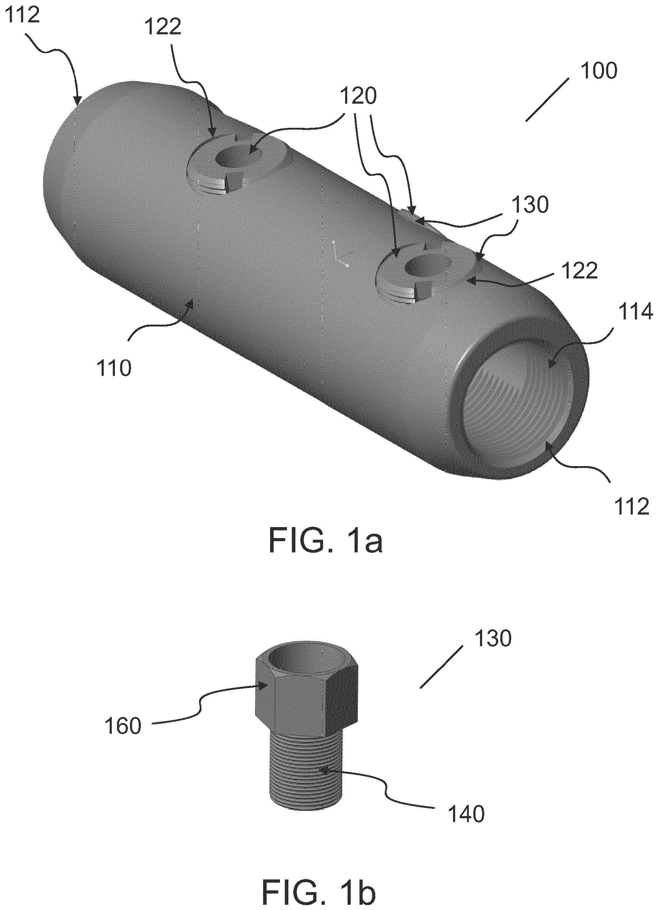

Fig. 1a illustrates a cable connector 100 (below, referred to as "connector") according to an embodiment. The connector 100 has a body 110, the surface of which may be curved. The surface may also be smooth. The body 110 may be substantially cylindrical to allow convenient accommodation of cylindrical cables. The body 110 comprises one or more inlets 112 for cables, for example one or more inlet 112 when the connector 100 is a cable lug or two or more inlets when the connector 100 is adapted for connecting two cables together. The inlets 112 may be circular openings. The body 110 comprises a bore, which may be cylindrical, for accommodating one or more cables. The bore may be an open bore but it may also be a closed bore, for example when the connector 100 is a cable lug. The bore may comprise threads or grooves 114 along the whole or partial length of the bore. The threads or grooves 114 may be adapted to form contact interfaces for transmitting electric current from a cable placed inside the connector into the body 110. Threads 114 may also be included for attaching the connector 100 to external bodies, for example to a collar or a flange. The diameter of the body 110, in the plane perpendicular to the longitudinal direction, may be, for example, 1-10 centimeters. The length of the body 110 may be, for example, 1-30 centimeters. The body 110 or the whole connector 100 may be made of rigid material. In particular, the body 110 or the connector 100 may be made of metal.

The connector 100 comprises one or more screw holes 120 (pictured here with screws 130 within) in the body 110. The number of holes may be, for example, from one to ten. For example, the number may be one for a cable lug, or two or four for a connector suitable for two cables. The holes 120 may be cylindrical. The holes 120 have edges 122, which may be substantially circular or oval or, in particular when the surface of the body 110 is curved, whose planar projection may be circular or oval. The holes 120 may extend transversely with respect to the longitudinal direction of the body 110. For example, the holes 120 may extend radially towards the central axis of the body 110. The holes 120 may, for example, be positioned in a single line or in two lines (the latter alternative pictured). The holes 120 may comprise threads for the screws 130.

An electrical conductor (also "cable") may be a single-wire conductor or a multi-wire conductor. It may comprise or be made of metal, for example of aluminum or copper. The expression "electrical conductor" may also be replaced by the expression "elongated body" where the disclosure relates to mechanical properties of the shearing screw 130.

Even though the connector 100 has been illustrated in Fig. 1a to comprise two inlets 112, the number and/or positioning of the inlets 112 may also differ. For example, the connector 100 may comprise two or more inlets positioned perpendicularly with respect to each other in a transverse dimension of the connector 100.

In an embodiment, the body 110 is joined with a second body to form a cable connector, the combination which may form a monolithic body. For example, the body 110 may be joined with an extension providing an attachment point through which the connector 100 may be attached to an external object. In particular, an attachment point may be included when the connector 100 is a cable lug.

Fig. 1b illustrates a shearing screw 130 according to an embodiment. The screw 130 comprises a screw body 140 and a tightener 160. The body 140 may be made of electrically conductive material, for example metal. The tightener 160 may be of same material as the screw body, for example metal, but it may also be made of a different material. The screw body 140 is adapted to engage a screw hole 120 in a cable connector, clamp a cable within the connector and partially shear off after a clamping connection has been made. To facilitate shearing and to save material, the screw body 140 may be hollow. The screw body may be adapted to shear when a force or torque exerted on the body exceeds a threshold force or torque. The threshold force or torque for shearing may be controlled by, for example, choice of material of the screw body 140 or thickness of the walls 143 of a hollow screw body 140. It is also possible to make weakenings in the screw body 140 but due to the construction of the screw 130, these are not mandatory. Consequently, the screw body 140 may be fabricated without any weakenings or predetermined shearing points or lines. The walls 143 may be tapered, for example so that the inner diameter of the screw body 140 is smaller at a first end 144 than at a second end 145. However, the shearing mechanism of the screw 130 allows the walls 143 to be constructed also having a constant thickness.

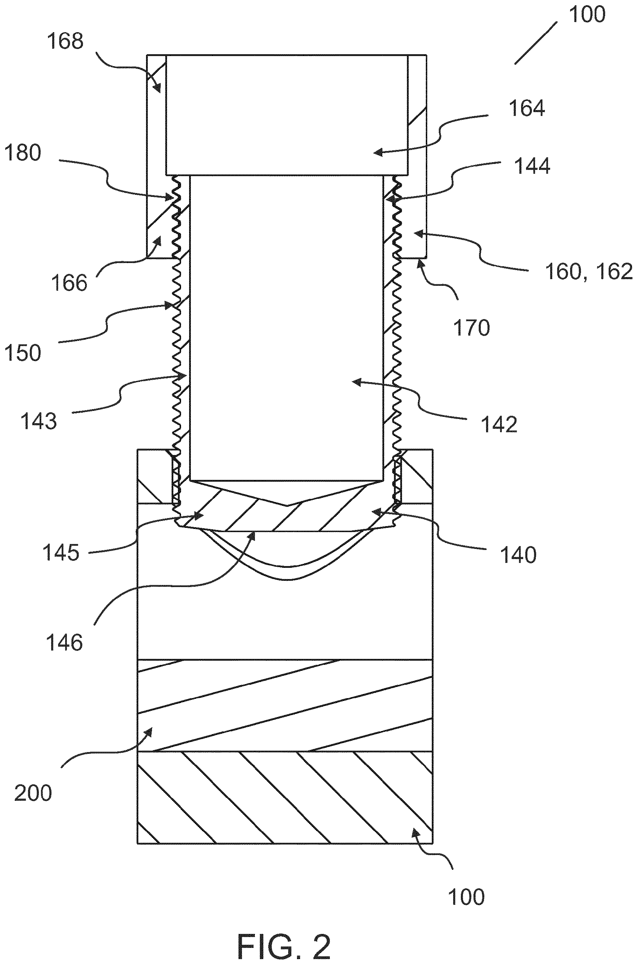

Fig. 2 illustrates a cable connector 100 according to an embodiment with a shearing screw 130 inserted therein in a cross-sectional view in a plane parallel both to the longitudinal direction of the cable connector 100 and the longitudinal direction of the shearing screw 130. In the figure, also an electrical conductor 200 placed in the connector 100 for clamping is illustrated.

The screw body 140 (also "body 140" or "first body 140") may be cylindrical, for example tubular. It may have an elongated shape so that its length exceeds its width, for example by being two times the width or even more. The screw body 140 may be hollowed by a longitudinal bore 142. The bore 142 may be, for example, cylindrical. Due to the bore 142, the body 140 may have outer walls 143 that are thinner than the diameter of the body 140. The thickness of the outer walls 143 and/or the material of the body 140 may be adapted so that the body 140 shears off under a given force or torque, which may be predetermined. For example, the body 140 may have a threshold force or torque for shearing so that a force or torque exceeding the threshold force or torque shears the body 140. The threshold force or torque may, for example, be defined in the longitudinal direction of the screw 130. This way, it is not necessary to predetermine the exact point or line where shearing takes place but instead the screw 130 may be adapted to shear at a length determined based on properties of the cable such as thickness. The screw body 140 has a first end 144 for engaging the tightener 160 and a second end 145 for engaging the cable connector 100. One or both ends 144, 145 of the body 140 may be open or they may both be closed. A closed end, in particular the second end 145, may comprise a supporting surface for a pressure element to be inserted within the body 140. The supporting surface may be, for example, flat or tapered. In the second end 145, i.e., the end arranged to engage the cable connector 100 and the cable therein, a clamping surface 146 is arranged. The clamping surface 146 may be, for example, a circular surface. It may be ring-shaped, formed for example by the bottom ends of the walls 143, or it may have a united shape, formed for example by a closed bottom end of the body 140. The clamping surface 146 may be flat or substantially flat. The screw body 140 comprises an external thread 150. The thread 150 may extend the whole length of the body 140 or it may cover only a part of the body 140. The thread 150 may have a constant pitch. The pitch of the thread may be adapted for the connector 100 so that it may be equal to the pitch of the screw holes 120 connector 100.

The shearing screw 130 also comprises a tightener 160, which may be formed as a sleeve adapted to transmit torque. The tightener 160 may be coupled with the screw body 140. The coupling may be adapted to yield only after a force or torque exceeding a threshold force or torque has been exerted on the coupling. The tightener 160 is adapted for fastening the shearing screw 130 by transmitting rotating force or torque to the screw body 140 allowing the screw body 140 to be screwed into a screw hole 120 of a cable connector 100. The tightener 160 is also adapted to shear the shearing screw 130 by transmitting tensile force into the screw body 140. The tightener 160 comprises a tightener body 162 (also "second body 162") which may be substantially cylindrical, for example tubular. The tightener body 162 comprises a bore 164, which may be a through-bore (as illustrated). This allows the screw body 140 to be placed within the tightener 160. The length of the screw body 140 may be larger than the length of the tightener 160 or the tightener body 162. The inner diameter of the tightener body 162 may be equal or substantially equal to the outer diameter of the screw body 140. In particular, the inner diameter may be at least as large as the outer diameter so that the longitudinal projection of the screw body 140 does not intersect with the tightener 160 so that the tightener 160 or any extensions therein do not block the screw body 140 in either of the longitudinal directions. A through-bore within the tightener body 162 may then allow the screw body 140 to pass all the way through the tightener 160. The tightener body 162 further comprises a first end 166 for engaging the screw body 140 and a second end 168, which may be adapted for engaging a tool for rotating the tightener 160. The tightener body 162 further comprises a bearing surface 170 for introducing tensile force into the tightener body 162 when the bearing surface 170 engages the cable connector 100. The bearing surface 170 may be circular and it may be adapted to enclose the screw body 140. It may also be flat or substantially flat to minimize friction when rotated against the cable connector 100. The tightener body 162 comprises an inner thread 180, which is adapted to engage the outer thread 150 of the screw body 140. The inner thread 180 may extend through the whole length or only a partial length of the tightener body 162. The inner diameter of the tightener 160 or the tightener body 162 outside the threaded region may be equal or larger than the inner diameter of the tightener body 162 corresponding to the threaded region to allow the screw body to penetrate also the length of the tightener 160 outside the threaded region. For the above, the inner diameter of the tightener body 162 corresponding to the threaded region may be defined to correspond to the diameter at the root of the thread 180, where the diameter is largest, as opposed to the the tip of the thread, where the diameter is smallest. The thread 180 may be, for example, triangularly shaped, in which case the root of the thread is located at the intersection of two triangles. The length of the threaded region of the screw body 140 may be larger than the length of the threaded region of the tightener 160 so that the tightener 160 can be screwed, at least a portion, along the length of the screw body 140. The tightener 160 may be installed in the first end 144 of the screw body 140.

The shearing screw 130 comprises an impediment for preventing or hindering relative movement between the screw body 140 and the tightener 160. The impediment corresponds to a region of the inner thread 180 of the tightener 160 or a region of the outer thread 150 of the screw body 140, either or both of which regions may be treated to prevent or hinder relative movement between the screw body 140 and the tightener 160, for example by increasing friction between the screw body 140 and the tightener 160. The length of the treated region of the inner thread 180 may correspond to the whole or partial length of inner thread 180. The length of the treated region of the outer thread 150 may correspond to the whole or partial length of inner thread 180 so that the impediment is effective only on partial length of the threaded region of the screw body 160. In particular, the impediment may be adapted to have a spatially discrete hindering or prevention effect. For example, the impediment may increase the static friction between the screw body 140 and the tightener 160. The impediment may have a threshold force or torque for impeding so that when a force or torque exceeding the threshold force or torque is transmitted into the impediment, the impediment breaks or yields. When the impediment is effective, the region may be located so that it is closer to the first end 144 than to the second end 145. For example, the region may be located in the first end 145 or beginning from the first end 145. This applies both to the case where a region of the outer thread 150 of the screw body 140 is adapted to form the impediment and to the case where a region of the inner thread 180 of the tightener 160 is adapted to form the impediment as in the latter case the tightener 160 and the screw body 140 may be coupled together according to the aforementioned positioning. When the impediment is formed in the tightener 160, it may be formed in the first end 166 or beginning from the first end 166. The impediment may be arranged between the outer thread 150 of the screw body 140 and the inner thread 180 of the tightener 160. The impediment may be arranged to be located only on the contact interface or contact surface of the outer thread 150 and the inner thread 180. The impediment may be arranged as a layer on a threaded region.

The impediment may transmit torque from the tightener 160 to the screw body 140, or vice versa, until the torque reaches a shearing torque, which may be predetermined, for example when the screw body 140 clamps the electrical conductor at a threshold force for clamping which may be determined. After that, the impediment may break and the tightener 160 turns while the screw body 140 remains in a fixed position. This way, a clamping force may be transmitted as a torque in the shearing screw 130.

According to the invention, the impediment may be formed by a mismatched thread. The mismatch may be effected by rough-finishing or underdimensioning or overdimensiong of thread. For example, the inner thread 180, the outer thread 150 or both may be machined by removing chips from the corresponding body, the fastener body 162 or the screw body 140. Mismatch then corresponds to removal of at least one chip less for one or more parts of the thread 150, 180. The mismatched thread may be formed in the region of the inner thread 180 or the region of the outer thread 150 or in both. The mismatch may comprise, for example, decreased depth or width of a groove forming the thread 150, 180, increased height or width of a ridge forming the thread 150, 180 or even partial absence of the groove of the thread 150, 180. The mismatch may also comprise a change in the slope or one or both side angles of a groove of the thread 150, 180. In this way, the inner thread 180 and the outer thread 150, and optionally also the thread of the screw hole 120, may have one or more common characteristics such as the depth, width, slope or one or both side angles of a groove of the thread 150, 180, height or width of a ridge of the thread 150, 180 or the pitch of the thread 150, 180. The impediment may then correspond to a region of the inner thread 180 or the outer thread 150, where one or more of these characteristics differ from the common characteristics. The mismatch may correspond, for example, to a region of one or more cycles of the thread 150, 180 including 1-3, 1-5 or 1-10 cycles. Impeding the relative movement or rotation of the screw body 140 and the tightener 160 by mismatched threads allows friction between the two bodies 140, 162 to be controlled without introducing additional objects or material in the contact interface. This, in turn, allows simplified manufacture and use.

According to the invention, the impediment may be formed by a punched thread *(in Finnish: meiste kierteessä)*. By punching out one or more regions of the inner thread 180 or the outer thread 150 or both, the friction between the threads 150, 180 may be increased. The friction is increased, for example, as a region of the thread 150, 180 is bent with respect to another region of the same thread 150, 180 or a thread 180, 150 engaging the thread 150, 180. The punched region may extend, for example, from the first end 166 of the tightener body 162 or from the first end 144 of the screw body 140. The punched region may correspond, for example, to a region of one or more cycles of the thread 150, 180 including 1-3, 1-5 or 1-10 cycles. A punched thread 150, 180 allows the friction between the threads 150, 180 to be controlled and increased in a simplified manner in a single manufacturing step.

In an embodiment, the impediment is formed in the inner thread 180 or a region of the inner thread 180. This may allow the impediment to be constantly effective when the tightener 160 is being used. In another embodiment, the impediment is formed in the outer thread 150 or a region of the outer thread 150. This allows the impediment to be effective only when the tightener 160 is located on the region of the impediment.

In an embodiment, the tightener 160 or the tightener body 162 comprises an interface adapted for a tool for rotating the tightener 160 or the tightener body 162. This allows a tool such as a spanner to be used for using the tightener 160 to screw the screw body 140 into the screw hole 120 of a cable connector 100. The interface may be polygonal, for example hexagonal, octagonal or a square. The polygonal shape of the interface may be observed in the plane perpendicular to the longitudinal direction of the shearing screw 130 and it may correspond to an inner surface, so as to provide a recess or a female contact for the tool, or it may correspond to an outer surface so as to provide a male contact for the tool. The surface may, for example, be located in the second end 168 of the tightener 160.

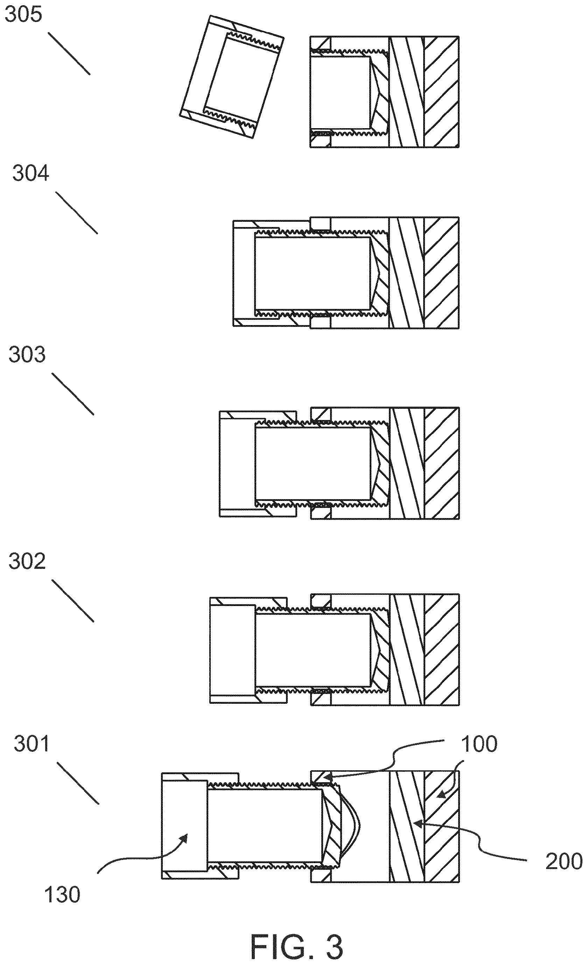

Fig. 3 illustrates a cable connector 100 according to an embodiment with a shearing screw 130 inserted therein in a cross-sectional view in a plane parallel both to the longitudinal direction of the cable connector 100 and the longitudinal direction of the shearing screw 130. In the figure, the insertion is shown in five steps (from bottom to top) and also an electrical conductor 200 placed in the connector 100 for clamping is illustrated.

In the first picture 301, the shearing screw 130 is engaged in a screw hole 120 in the cable connector 100. At this point, the tightener 160 and the screw body 140 may be stationary with respect to each other and they may be held together by the impediment so that their relative movement, such as rotation, is prevented or hindered. When the tightener 160 is rotated, the rotating force or torque is transmitted to the screw body 140, by means such as friction. The screw body 140, in turn, rotates in the screw hole 120 and the threads of the screw hole 120 contact the outer threads 150 of the screw body 140 to direct the screw body 140 towards the electrical conductor 200. Because of the impediment, friction between the threads of the screw hole 120 and the outer threads 150 can be made smaller than friction between the inner threads 180 of the tightener 160 and the outer threads 150 so that relative rotation between the tightener 160 and the screw body 140 may be hindered or prevented. For example, the tightener 160 and the screw body 140 may be held together by static friction. This corresponds to a tightening phase, during which the screw body 140 becomes screwed into the cable connector 100 so that it engages the electrical conductor 200 (second picture 302). The clamping surface 146 becomes pressed against the electrical conductor 200 so that a clamping force is exerted between the electrical conductor 200 and the screw body 140. The clamping force may be conducted substantially longitudinally within the screw body 140. As the shearing screw 130 is further rotated, the clamping force increases and may exceed a threshold force. This threshold force for tightening may correspond to the threshold force or torque of impeding for the impediment and exceeding it may cause the impediment to yield, for example so that a threshold for static friction for the impediment is exceeded. This may further cause the impediment, such as an adhesive contact, to break. In any case, exceeding it may allow the tightener 160 to move, for example to rotate, with respect to the screw body 140. The threshold force or torque for tightening may be adapted for the cable connector 100 and/or the electrical conductor 200, for example based on material characteristics of the electrical conductor 200. This allows the clamping force to be controlled so that the tightening phase ends when a desired force output has been reached.

Exceeding the threshold force or torque for tightening results in the force or torque exerted on the tightener 160 no longer substantially tightening the shearing screw 130, i.e. moving of the screw body 140 with respect to the electrical conductor 200 (third picture 303) is reduced or becomes halted. Instead, force or torque exerted on the tightener 160 simply moves the tightener 160 with respect to the screw body 140 without further substantially moving the screw body 140 with respect to the electrical conductor 200. As it is possible that the impediment in the tightening phase may also be adapted only to hinder rotation instead of preventing it completely, the impediment may still be effective at this phase. However, due to the clamping force exceeding the threshold force or torque for tightening, the impediment no longer is the dominant factor in determining the relative motion between the tightener 160 and the screw body 140 due to the clamping force directed in to the screw body 140 through the clamping surface 146. The tightener 160 may therefore be screwed, by rotation, all the way along the length of the screw body 140 to engage the cable connector 100 (fourth picture 304). In particular, this may be done without substantially effecting any further tightening. Once the bearing surface 170 of the tightener 160 engages the cable connector 100, a supporting force is exerted from the cable connector 100 to the tightener 160 and, in turn, transmitted to the screw body through the contact effected by the outer threads 150 and the inner threads 180. The contact further allows a tensile force to be transmitted into the screw body 140 in the substantially longitudinal dimension of the screw body 140. This way, the tightener 160 may be adapted to transmit the tensile force in the longitudinal direction of the shearing screw 130 for shearing off the shearing screw 130 (fifth picture 305). When the tensile force exceeds the threshold force or torque for shearing, a portion of the screw body 140 is sheared off.

The screw body 140 may have a continuous shearing surface along the length of the body 140 for facilitating shearing of the shearing screw at any length within the continuous shearing surface. The shearing screw 130 may even be adapted so that the shearing surface extends substantially the whole length of the screw body 140. Shearing may then take place in a region located at any length along the longitudinal dimension of the screw body 140. In any case, the location of shearing may be determined by the intersection of the cable connector 100, the clamping surface 146 and the screw body 140. The construction of the shearing screw 130 allows the shearing to take place in a flat shearing plane, which may be substantially perpendicular to the longitudinal axis of the screw body 140. The shearing plane may be located substantially on the surface of the cable connector 100. In this way, the screw 130 after being sheared off neither substantially extends from the screw hole 120 nor forms a recess in the screw hole 120. The tightener 160 may stay in one piece throughout the fastening of the shearing screw 130. It may be connected together with the sheared off portion of the screw body 140 and it may, consequently, be simultaneously torn off with the sheared off portion.

## Claims

1. A shearing screw (130) for clamping an electrical conductor (200) within a cable connector (100), the shearing screw (130) comprising:
a first body (140) having an outer thread (150) for engaging the cable connector (100);
a clamping surface (146) for clamping the electrical conductor (200) within the cable connector (100);
a portion of the first body (140) being configured to tear off;
a tightener (160) for fastening the shearing screw (130) to the cable connector (100) and for shearing the shearing screw (130);
wherein:
the tightener (160) comprises a second body (162) having an inner thread (180) for engaging the outer thread (150) of the first body (140) and a bearing surface (170) for engaging the cable connector (100) so that a tensile force is introduced in the shearing screw (130) for shearing the shearing screw (130), wherein a region of the inner thread (180) or a region of the outer thread (150) is adapted to form an impediment for preventing or hindering relative movement between the first body (140) and the tightener (160), and wherein the shearing screw (130) is **characterized by** the impediment being formed by a mismatched or punched thread (150, 180), wherein the impediment is adapted to yield when a clamping force transmitted into the shearing screw (130) exceeds a threshold force.

2. A shearing screw (130) according to claim 1, wherein the first body (140) has a first end (144) for engaging the tightener (160) and a second end (145) for engaging the cable connector (100); and the impediment is situated at the first end (144).

3. A shearing screw (130) according to claim 1 or 2, wherein the impediment is adapted to prevent or hinder rotation of the first body (140) with respect to the second body (162) while the shearing screw (130) is being screwed into the cable connector (100) .

4. A shearing screw (130) according to any of claims 1-3, wherein the first body (140) has a continuous shearing surface along the length of the first body (140) for facilitating shearing of the shearing screw (130) at any length within the continuous shearing surface.

5. A shearing screw (130) according to any of claims 1-4, wherein the first body (140) is hollow.

6. A shearing screw (130) according to any of claims 1-5, wherein the second body (162) has a surface adapted for a tool for rotating the second body (162).

7. A shearing screw (130) according to claim 6, wherein the surface is polygonal.

8. A method for clamping an electrical conductor (200) to a cable connector (100) using a shearing screw (130) according to any of claims 1-7, the method comprising:
rotating (301, 302) the tightener (160) to effect rotation of the first body (140), thereby screwing the first body (140) into the cable connector (100);
rotating (303, 304) the tightener (160) to effect yielding of the impediment, thereby causing the second body (162) to rotate with respect to the first body (140) until the bearing surface (170) engages the cable connector (100); and
rotating (305) the tightener (160) to effect a tensile force to be transmitted through the bearing surface (170) to the shearing screw, thereby causing the portion of the first body (140) to tear off.

## Patentansprüche

1. Scherschraube (130) zum Klemmen eines elektrischen Leiters (200) in einem Kabelverbinder (100), wobei die Scherschraube (130) umfasst:
einen ersten Körper (140) mit einem Außengewinde (150) zum Eingreifen des Kabelverbinders (100);
eine Klemmfläche (146) zum Klemmen des elektrischen Leiters (200) in dem Kabelverbinder (100);
einen Teil des ersten Körpers (140), der zum Abreißen konfiguriert ist;
einen Spanner (160) zum Befestigen der Scherschraube (130) an dem Kabelverbinder (100) und zum Scheren der Scherschraube (130);
wobei:
der Spanner (160) einen zweiten Körper (162) mit einem Innengewinde (180) zum Eingreifen des Außengewindes (150) des ersten Körpers (140) und eine Lagerfläche (170) zum Eingreifen des Kabelverbinders (100) aufweist, so dass eine Zugkraft in die Scherschraube (130) zum Scheren der Scherschraube (130) eingeleitet wird, wobei ein Bereich des Innengewindes (180) oder ein Bereich des Außengewindes (150) geeignet ist, ein Hindernis zu bilden, um eine Relativbewegung zwischen dem ersten Körper (140) und dem Spanner (160) zu verhindern oder zu behindern, und wobei die Scherschraube (130) **dadurch gekennzeichnet ist, dass** das Hindernis durch ein nicht angepasstes oder gestanztes Gewinde (150, 180) gebildet wird, wobei das Hindernis gestaltet ist nachzugeben, wenn eine in die Scherschraube (130) übertragene Klemmkraft eine Schwellenkraft überschreitet.

2. Scherschraube (130) nach Anspruch 1, wobei der erste Körper (140) ein erstes Ende (144) zum Eingreifen des Spanners (160) und ein zweites Ende (145) zum Eingreifen des Kabelverbinders (100) aufweist; und das Hindernis am ersten Ende (144) angeordnet ist.

3. Scherschraube (130) nach Anspruch 1 oder 2, wobei das Hindernis gestaltet ist, eine Drehung des ersten Körpers (140) in Bezug auf den zweiten Körper (162) zu verhindern oder zu behindern, während die Scherschraube (130) in den Kabelverbinder (100) eingeschraubt ist.

4. Scherschraube (130) nach einem der Ansprüche 1-3, wobei der erste Körper (140) eine durchgehende Scherfläche entlang der Länge des ersten Körpers (140) aufweist, um Scheren der Scherschraube (130) auf jeder Länge innerhalb der durchgehenden Scherfläche zu erleichtern.

5. Scherschraube (130) nach einem der Ansprüche 1-4, wobei der erste Körper (140) hohl ist.

6. Scherschraube (130) nach einem der Ansprüche 1 bis 5, wobei der zweite Körper (162) eine Oberfläche aufweist, die für ein Werkzeug zum Drehen des zweiten Körpers (162) gestaltet ist.

7. Scherschraube (130) nach Anspruch 6, wobei die Oberfläche polygonal ist.

8. Verfahren zum Klemmen eines elektrischen Leiters (200) an einem Kabelverbinder (100) unter Verwendung einer Scherschraube (130) nach einem der Ansprüche 1 - 7, wobei das Verfahren umfasst:
Drehen (301, 302) des Spanners (160), um eine Drehung des ersten Körpers (140) zu bewirken, wodurch der erste Körper (140) in den Kabelverbinder (100) geschraubt wird;
Drehen (303, 304) des Spanners (160), um ein Nachgeben des Hindernisses zu bewirken, wodurch der zweite Körper (162) veranlasst wird, sich in Bezug auf den ersten Körper (140) zu drehen, bis die Lagerfläche (170) mit dem Kabelverbinder (100) in Eingriff kommt; und Drehen (305) des Spanners (160), um eine Zugkraft zu bewirken, die durch die Lagerfläche (170) auf die Scherschraube übertragen wird, wodurch der Teil des ersten Körpers (140) abgerissen wird.

## Revendications

1. Vis de cisaillement (130) pour fixer un conducteur électrique (200) dans un connecteur de câble (100), la vis de cisaillement (130) comprenant :
un premier corps (140) ayant un filetage externe (150) pour s'engager avec le connecteur de câble (100) ;
une surface de fixation (146) pour fixer le conducteur électrique (200) dans le connecteur de câble (100) ;
une partie du premier corps (140) étant configurée pour être arrachée ;
un élément de serrage (160) pour attacher la vis de cisaillement (130) au connecteur de câble (100) et pour cisailler la vis de cisaillement (130) ;
dans laquelle l'élément de serrage (160) comprend un deuxième corps (162) ayant un filetage interne (180) pour s'engager avec le filetage externe (150) du premier corps (140) et une surface d'appui (170) pour s'engager avec le connecteur de câble (100) de sorte qu'une force de traction soit introduite dans la vis de cisaillement (130) pour cisailler la vis de cisaillement (130), où une région du filetage interne (180) ou une région du filetage externe (150) est adaptée pour former un obstacle afin d'empêcher ou d'entraver un mouvement relatif entre le premier corps (140) et l'élément de serrage (160),
la vis de cisaillement (130) étant **caractérisée par le fait que** l'obstacle est formé par un filetage mal adapté ou perforé (150, 180), l'obstacle étant en outre adapté pour céder lorsqu'une force de fixation transmise dans la vis de cisaillement (130) dépasse une force seuil.

2. Vis de cisaillement (130) selon la revendication 1, dans laquelle le premier corps (140) a une première extrémité (144) pour s'engager avec l'élément de serrage (160) et une deuxième extrémité (145) pour s'engager avec le connecteur de câble (100) ; et l'obstacle est situé au niveau de la première extrémité (144).

3. Vis de cisaillement (130) selon la revendication 1 ou 2, dans laquelle l'obstacle est adapté pour empêcher ou entraver la rotation du premier corps (140) par rapport au deuxième corps (162) pendant que la vis de cisaillement (130) est vissée dans le connecteur de câble (100).

4. Vis de cisaillement (130) selon l'une quelconque des revendications 1 à 3, dans laquelle le premier corps (140) a une surface de cisaillement continue sur la longueur du premier corps (140) pour faciliter le cisaillement de la vis de cisaillement (130) à n'importe quelle longueur dans la surface de cisaillement continue.

5. Vis de cisaillement (130) selon l'une quelconque des revendications 1 à 4, dans laquelle le premier corps (140) est creux.

6. Vis de cisaillement (130) selon l'une quelconque des revendications 1 à 5, dans laquelle le deuxième corps (162) a une surface adaptée pour un outil pour faire tourner le deuxième corps (162).

7. Vis de cisaillement (130) selon la revendication 6, dans laquelle ladite surface est polygonale.

8. Procédé de fixation d'un conducteur électrique (200) à un connecteur de câble (100) en utilisant une vis de cisaillement (130) selon l'une quelconque des revendications 1 à 7, le procédé comprenant :
Une rotation (301, 302) de l'élément de serrage (160) pour faire tourner le premier corps (140), vissant ainsi le premier corps (140) dans le connecteur de câble (100) ;
Une rotation (303, 304) de l'élément de serrage (160) pour faire céder l'obstacle, amenant ainsi le deuxième corps (162) à tourner par rapport au premier corps (140) jusqu'à ce que la surface d'appui (170) s'engage avec le connecteur de câble (100) ; et
Une rotation (305) de l'élément de serrage (160) pour obtenir une force de traction à transmettre à travers la surface d'appui (170) à la vis de cisaillement, amenant ainsi la partie du premier corps (140) à être arrachée.
